(19) **Europäisches Patentamt**
**European Patent Office**
**Office européen des brevets**

(11) **EP 4 509 867 A1**

(12) **EUROPEAN PATENT APPLICATION**
published in accordance with Art. 153(4) EPC

(43) Date of publication:
**19.02.2025 Bulletin 2025/08**

(21) Application number: **24792969.8**

(22) Date of filing: **16.04.2024**

(51) International Patent Classification (IPC):
*G01S 7/40* (2006.01)    *G01S 13/06* (2006.01)

(52) Cooperative Patent Classification (CPC):
**G06T 7/80; G01S 7/2926; G01S 7/40; G01S 7/414;**
**G01S 13/89;** G06T 2207/10028

(86) International application number:
**PCT/KR2024/005063**

(87) International publication number:
**WO 2024/219783 (24.10.2024 Gazette 2024/43)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.04.2023 KR 20230052870**

(71) Applicant: **Korea Electronics Technology Institute**
**Seongnam-si, Gyeonggi-do 13509 (KR)**

(72) Inventors:
• **LEE, Jae Won**
  **Seoul 03437 (KR)**
• **JANG, Dal Won**
  **Gimpo-si, Gyeonggi-do 10078 (KR)**
• **LEE, Jong Seol**
  **Paju-si, Gyeonggi-do 10908 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **DEVICE AND METHOD FOR USING SPATIAL VOXELIZATION TO DETERMINE LOCATION OF OBJECT SENSED BY RADAR**

(57)    Provided, according to the present disclosure, is a method for using spatial voxelization to determine the location of an object sensed by a radar, the method comprising: a voxelization step for loading a radar sensing file created by receiving and storing a reflected signal which is a radio signal, transmitted by a radar, which has returned upon being reflected from an object, retrieving a voxel corresponding to the location of a point stored in the radar sensing file, and accumulating, in the voxel ID of the retrieved voxel, the reflected signal strength of the point, and storing same, thereby generating a dictionary; a point extraction step for loading the radar sensing file, retrieving a voxel corresponding to the location of a point stored in the radar sensing file, and if the ID of the retrieved voxel is the same as the ID of the voxel having the greatest cumulative reflected signal strength value in the dictionary, then separately storing the location coordinates of the point; and a step for, on the basis of the separately stored location coordinates of the point, determining the location of a reference point which acts as the reference for calibration. Thus, a reference point of a radar may be precisely determined for calibration.

FIG.1

## Description

### [Technical Field]

The disclosed technology relates to an apparatus and method for determining the position of an object sensed by a radar using spatial voxelization.

### [Background Art]

A radar outputs a radio wave signal and receives a signal reflected by an object. Depending on the characteristics of the surface of the object, the radio wave signal is reflected with intensities in various directions. When various types of objects are present in a space, reflected signals having various intensities may be received in various directions. Therefore, complex calculation must be performed to analyze the reflected signal received by the radar and to select the position of the object.

Meanwhile, with growth of autonomous driving technology, technology is being developed to calibrate sensors such as a radar, a lidar, and a camera. Calibration is adjustment of the radar, the lidar, and the camera to recognize the position of a specific object as the same position. During the calibration process, the radar has difficulty positioning a specific object due to the characteristic that reflected signals having various intensities are received in various directions. This characteristic requires limiting the presence of other objects in a space in which calibration is performed. Therefore, a space and a separate tool are required for calibration.

[Related Art Document]

[Patent Document]

(Patent Document 1) KR 10-2023-0013763 A

### [Disclosure]

### [Technical Problem]

It is an object of the disclosed technology to provide an apparatus and method for determining the position of an object sensed by a radar using spatial voxelization.

### [Technical Solution]

In accordance with an aspect of the disclosed technology, the above and other objects can be accomplished by the provision of a method of determining the position of an object sensed by a radar using spatial voxelization, the method including a voxelization step of loading a radar sensing file storing a reflected signal returned as a result of a radio wave signal transmitted by the radar being reflected by the object, searching for a voxel corresponding to the position of a point stored in the radar sensing file, and cumulatively storing the reflected signal intensity of the point in a voxel ID of the searched voxel to create a dictionary, a point extraction step of loading the radar sensing file, searching for a voxel corresponding to the position of the point stored in the radar sensing file, and separately storing the position coordinates of the point when a voxel ID of the searched voxel is the same as a voxel having the largest accumulated value of the reflected signal intensity in the dictionary, and a reference point position determination step of determining the position of a reference point for calibration based on the separately stored position coordinates of the point.

In an embodiment, the radar sensing file may be created by the radar receiving the reflected signal and storing the position coordinates and reflected signal intensity of a point in the form of point cloud data.

In an embodiment, the voxelization step may include a parameter setting step of setting parameters including a voxel size, lower and upper thresholds of the reflected signal intensity, and a space range in which a voxel grid is to be created, a filtering step of excluding points having reflected signal intensities deviating from the range between the lower and upper thresholds, a voxel grid creation step of creating a voxel grid based on the voxel size and the space range, and a dictionary creation step of searching, in the voxel grid, for a voxel corresponding to the position of the point stored in the radar sensing file and cumulatively storing the reflected signal intensity of the point in a voxel ID of the searched voxel to create a dictionary.

In an embodiment, the dictionary creation step may include a voxel search step of searching for a voxel corresponding to the position of the point stored in the radar sensing file in the voxel grid, a determination step of determining whether a voxel ID of the searched voxel is present in the dictionary, an addition step of, when the voxel ID of the searched voxel is not present in the dictionary, adding the voxel ID of the searched voxel to the dictionary, storing the reflected signal intensity in the voxel ID, storing the count of the point recorded in the voxel ID, dividing the reflected signal intensity by the count, and storing the average reflected signal intensity, and an accumulation step of, when the voxel ID of the searched voxel is present in the dictionary, cumulatively storing the reflected signal intensity of the voxel ID of the searched voxel in the dictionary, cumulatively storing the count of the point recorded in the voxel ID, dividing the reflected signal intensity by the count, and storing the average reflected signal intensity.

In an embodiment, the point extraction step may include a parameter setting step of setting parameters including a voxel size, lower and upper thresholds of the reflected signal intensity, and a space range in which a voxel grid is to be created, a filtering step of excluding points having reflected signal intensities deviating from the range between the lower and upper thresholds, a voxel grid creation step of creating a voxel grid based on the voxel size and the space range, and a top voxel point extraction step of loading the radar sensing file, searching for a voxel corresponding to the position of the point stored in the radar sensing file, separately storing the position coordinates of the point when a voxel ID of the searched voxel is the same as a voxel ID of the top voxel having the largest accumulated value of the reflected signal intensity in the dictionary, and extracting the point of the top voxel.

In an embodiment, the top voxel point extraction step may include a voxel search step of searching for a voxel corresponding to the position of the point stored in the radar sensing file in the voxel grid, a determination step of determining whether a voxel ID of the searched voxel matches the voxel ID of the top voxel in the dictionary, and a point position storage step of, when the voxel ID of the searched voxel matches the voxel ID of the top voxel, storing the position of the point in the voxel ID of the top voxel.

In an embodiment, the top voxel point extraction step may further include determining whether a current file including the point matches a target file when the voxel ID of the searched voxel matches the voxel ID of the top voxel in the dictionary, when the current file matches the target file, the point position storage step may be performed, and when the current file does not match the target file, the point position storage step may not be performed.

In accordance with another aspect of the disclosed technology, there is provided an apparatus for determining the position of an object sensed by a radar using spatial voxelization, the apparatus including a radar configured to transmit a radio wave signal and to receive a reflected signal reflected by the object and a determination module configured to analyze a radar sensing file storing the reflected signal received by the radar using spatial voxelization and to determine the position of a reflector based on which calibration is performed.

In an embodiment, the determination module may include a processor configured to execute program code, a storage unit connected to the processor so as to transmit and receive data to and from the processor, the storage unit being configured to store the program code, the radar sensing file storing the reflected signal received by the radar, and a dictionary, and an input/output unit connected to the processor so as to transmit and receive data to and from the processor, the input/output unit being configured to receive a parameter required for voxelization, and the program code is written to perform any one of the methods of determining the position of the object sensed by the radar using spatial voxelization.

The features and advantages of the disclosed technology will be more clearly understood from the following detailed description taken in conjunction with the accompanying drawings.

It should be understood that the terms used in the specification and appended claims should not be construed as being limited to general and dictionary meanings, but should be construed based on meanings and concepts according to the spirit of the disclosed technology on the basis of the principle that the inventor is permitted to define appropriate terms for the best explanation.

[Advantageous effects]

In accordance with the disclosed technology, it is possible to determine the position of a reference object for calibration in an environment in which various objects are present using a single radar.

[Description of Drawings]

[0018]

　FIG. 1 is a view showing an environment in which an apparatus for determining the position of an object sensed by a radar using spatial voxelization according to one embodiment of the disclosed technology is used;

　FIG. 2 is a view showing an apparatus for determining the position of an object sensed by a radar using spatial voxelization according to one embodiment of the disclosed technology;

　FIG. 3 is a flowchart showing a method of determining the position of an object sensed by a radar using spatial voxelization according to one embodiment of the disclosed technology;

　FIG. 4 is a view illustrating data including a reflected signal received by the radar according to one embodiment of the disclosed technology;

　FIG. 5 is a view illustrating spatial voxelization according to one embodiment of the disclosed technology;

　FIG. 6 is a view illustrating a voxel dictionary according to one embodiment of the disclosed technology;

　FIG. 7 is a view illustrating extraction of a point and determination of a reference point according to one embodiment of the disclosed technology;

　FIG. 8 is a view illustrating calibration according to one embodiment of the disclosed technology; and

　FIG. 9 is a view illustrating a method of extracting a reference point at the point in time of calibration.

[Best Mode]

Objects, advantages, and features of the disclosed technology will be apparent from exemplary embodiments and the following detailed description in connection with the accompanying drawings, but the disclosed technology is not necessarily limited thereto. Furthermore, in the following description of the disclosed technology, a detailed description of known technology incorporated herein will be omitted when it may obscure the subject matter of the disclosed technology.

It should be noted that, when reference numerals are assigned to the elements of the drawings, the same or similar reference numerals are assigned to the same or similar elements even when they are illustrated in different drawings.

The terminology used to describe one embodiment of the disclosed technology is not intended to limit the disclosed technology. It should be understood that singular forms are intended to include plural forms unless mentioned otherwise.

The drawings may be shown schematically or exaggeratedly to illustrate embodiments.

As used herein, expressions such as "has," "may have," "includes," or "may include" refer to the presence of a feature (e.g., a numerical value, function, operation, or a component such as a part) and do not exclude the presence of additional features.

Terms such as "one," "other," "another," "first," and "second" are used to distinguish one component from another, and the components are not limited by such terms.

It should be understood that terms denoting directions, such as up, down, left, right, X-axis, Y-axis, Z-axis, are for convenience of description only and may be expressed differently depending on the position of an observer or the position of a target.

Embodiments described herein and the accompanying drawings are not intended to limit the disclosed technology to a specific embodiment. the disclosed technology is to be understood to include various modifications, equivalents, and/or alternatives of the embodiments.

Hereinafter, one embodiment of the disclosed technology will be described in detail with reference to the accompanying drawings.

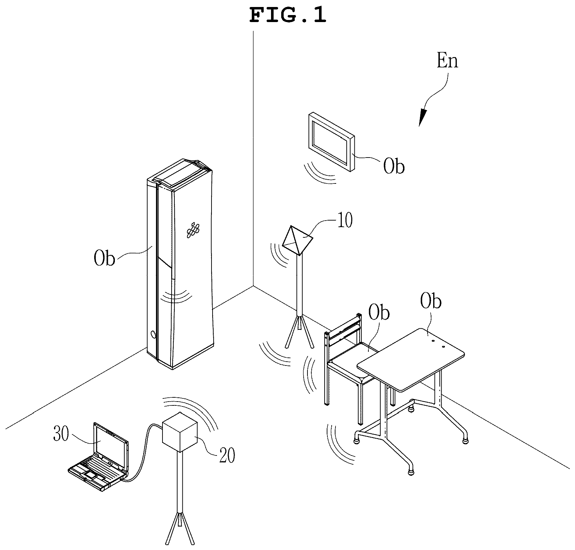

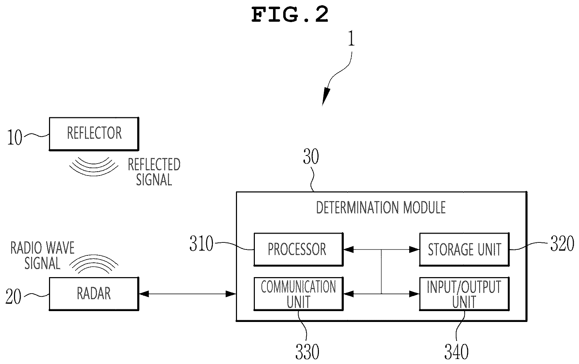

FIG. 1 is a view showing an environment En in which an apparatus 1 for determining the position of an object sensed by a radar using spatial voxelization according to one embodiment of the disclosed technology is used. FIG. 2 is a view showing an apparatus 1 for determining the position of an object sensed by a radar using spatial voxelization according to one embodiment of the disclosed technology.

The apparatus 1 for determining the position of the object sensed by the radar using spatial voxelization according to the embodiment of the disclosed technology may be used in an environment En in which other objects Ob are present in a space in which a radar 20 and a reflector 10 are present. For example, the environment En may be a space in which a desk, a chair, a partition, a clock, a picture frame, and various other objects Ob are disposed. The environment En in the embodiment of the disclosed technology may include the state in which the radar 20 and reflector 10 are disposed together in the space in which various objects Ob are disposed.

In general, the environment En in which calibration is performed using the radar 20, a lidar, and a camera is a space in which only the reflector 10 used as a reference is present. When various objects are present in the space, a radio signal from the radar 20 is diffusely reflected, making it difficult to accurately distinguish a reference object. Conventionally, therefore, a method of determining the position of the reflector 10 using two or more radars 20 is used.

In contrast, the embodiment of the disclosed technology is capable of accurately distinguishing the position of the reflector 10 even when various objects Ob are present in the environment En. In addition, the position of the reflector 10 may be accurately determined even when only a single radar 20 is used. Thus, only a single radar 20 needs to be prepared to perform calibration, thereby minimizing equipment cost, and calibration may be performed in a typical office space, thereby minimizing cost of space required.

The apparatus 1 for determining the position of the object sensed by the radar using spatial voxelization according to the embodiment of the disclosed technology may include a radar 20 and a determination module 30. The apparatus 1 for determining the position of the object sensed by the radar using spatial voxelization according to the embodiment of the disclosed technology may further include a reflector 10.

A single radar 20 may be used as the radar 20. The radar 20 may transmit a radio wave signal and may receive a signal reflected by the object. The radar 20 may transmit a radio wave signal having a frequency of 79 GHz. The radio wave signal transmitted by the radar 20 may have different frequencies. The reflected signal may be received by the radar 20 with various paths and intensities depending on the shape and the material of the object, the distance between the object and the radar 20, and various other factors. The radar 20 may output the position coordinates of a point from which the received reflected signal originated and reflected signal intensity. The point refers to the part of the object from which the reflected signal originated. The position coordinates may include values in the X-axis, Y-axis, and Z-axis. The reflected signal intensity refers to the intensity of the reflected signal reflected by the object and received by the radar 20. The reflected signal intensity may be the radar cross section (RCS) of the radar 20.

The reflector 10 is an object made of a material that is highly reflective of radio wave signals. The reflector 10 may include a corner reflector. The reflector 10 may be formed in a shape that reflects the radio wave signal output by the radar 20 toward the radar 20 with minimal loss. The reflector 10 is positioned so as to be used as a reference point for calibration relative to the radar 20.

The determination module 30 may store the position coordinates and the reflected signal intensity of the point received from the radar 20 to create a radar sensing file F. The determination module 30 may receive the radar sensing file F created using the radar 20. The determination module 30 may analyze the radar sensing file F storing the reflected signal received by the radar 20 using spatial voxelization to determine the position of the reflector 10 based on which calibration is performed.

The determination module 30 may include a computer device. For example, the determination module 30 may include a desktop computer, a laptop computer, a server, a tablet computer, and other devices capable of performing information processing functions. The determination module 30 may be connected to the radar 20 to receive the position coordinates and the reflected signal intensity of the point output by the radar 20.

The determination module 30 may include a processor 310 configured to execute program code, a storage unit 320 connected to the processor 310 so as to transmit and receive data to and from the processor, the storage unit being configured to store the program code, the radar sensing file F storing the reflected signal received by the radar 20, and a dictionary, and an input/output unit 340 connected to the processor 310 so as to transmit and receive data to and from the processor, the input/output unit being configured to receive a parameter required for voxelization. The determination module 30 may further include a communication unit 330 connected to the processor 310 so as to transmit and receive data to and from the processor, the communication unit being configured to transmit and receive data to and from an external device. Here, the program code may be written to perform the method of determining the position of the object sensed by the radar using spatial voxelization.

The processor 310 may include an element capable of performing information processing. The processor 310 may be a CPU, a GPU, an AP, or any of various other computing devices. The determination module 30 may include a plurality of processors 310. The plurality of processors 310 may be connected to each other so as to transmit and receive data to and from each other. The processor 310 may perform a method of determining the position of an object sensed by a radar using spatial voxelization according to one embodiment written in program code.

The storage unit 320 may store data required to perform the method of determining the position of the object sensed by the radar using spatial voxelization. The storage unit 320 may include RAM, ROM, memory, a hard disk, or cloud storage. The storage unit 320 may store program code written to perform each step of the method of determining the position of the object sensed by the radar using spatial voxelization. The program code may be executed by the processor 310. The storage unit 320 may store a radar sensing file F, a voxel dictionary, position coordinates of separately stored points, parameters, and other data.

The input/output unit 340 may include a keyboard, a mouse, a touchpad, a touchscreen, or a pen configured to receive input by a user. The input/output unit 340 may include a display or a speaker configured to provide information to the user. The input/output unit 340 may provide a screen configured to allow the user to input a parameter, and may visually provide analysis results.

The communication unit 330 may be connected to a communication network to transmit and receive data. The processor 310 may download the radar sensing file F through the communication unit 330, and may transmit the analysis results. The communication unit 330 may use any of various communication methods, such as 5G, 6G, satellite communication, Wi-Fi, Bluetooth, LAN, WAN, Ethernet, IP4, or IP6.

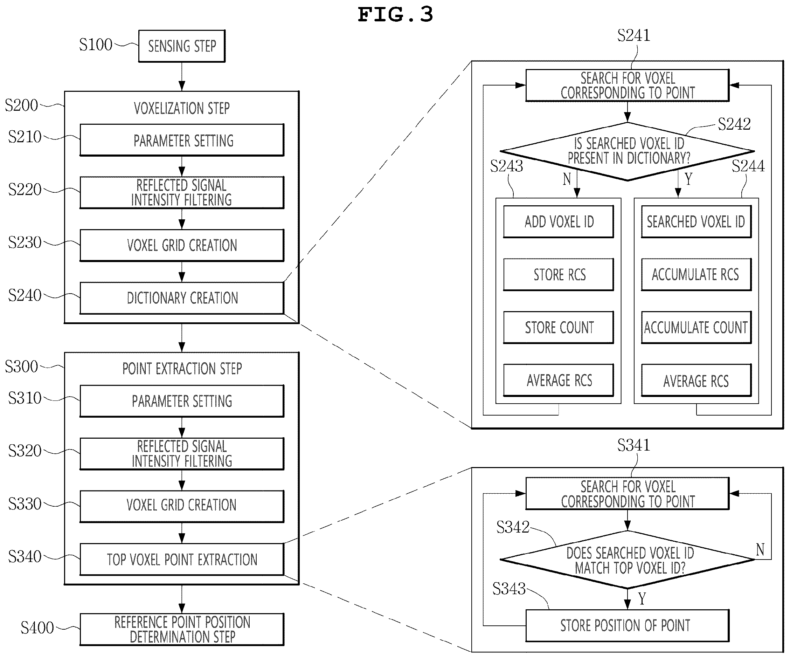

FIG. 3 is a flowchart showing a method of determining the position of an object sensed by a radar using spatial voxelization according to one embodiment of the disclosed technology.

The processor 310 performs the method of determining the position of the object sensed by the radar 20 using spatial voxelization according to the embodiment. The method of determining the position of the object sensed by the radar 20 using spatial voxelization according to the embodiment includes a voxelization step (S200) of loading a radar sensing file F storing a reflected signal returned as the result of a radio wave signal transmitted by the radar 20 being reflected by the object, searching for a voxel corresponding to the position of a point stored in the radar sensing file F, and cumulatively storing the reflected signal intensity of the point in a voxel ID of the searched voxel to create a dictionary, a point extraction step (S300) of loading the radar sensing file F, searching for a voxel corresponding to the position of the point stored in the radar sensing file F, and separately storing the position coordinates of the point when the voxel ID of the searched voxel is the same as a voxel having the largest accumulated value of the reflected signal intensity in the dictionary, and a reference point position determination step (S400) of determining the position of a reference point for calibration based on the separately stored position coordinates of the point. The voxelization step (S200), the point extraction step (S300), and the reference point position determination step (S400) may be performed by the processor 310.

The voxelization step (S200) is a process of determining which voxel a point stored in the radar sensing file F corresponds to and storing information of the point in a dictionary in a state of being matched with the voxel. The dictionary may store the information of the point included in the voxel. The dictionary may store a voxel ID, reflected signal intensity, count, and the average reflected signal intensity. The dictionary does not store the position of the point. Storing the position of the point in the dictionary may increase the size of the dictionary and slow down data processing. When voxels are listed in descending order of the reflected signal intensity, the voxel having the largest reflected signal intensity may be called the top voxel. Since the top voxel has the largest accumulated reflected signal intensity, the top voxel includes a large number of points, which may be interpreted as having large reflected signal intensity and thus a space in which the reflector 10 is likely to be located.

The point extraction step (S300) is a process of reading points stored in the radar sensing file F, determining whether the points are included in the top voxel stored in the dictionary, and extracting only the point included in the top voxel. By separately performing the voxelization step (S200), which creates the dictionary, and the point extraction step (S300), which extracts the point included in the top voxel, it is possible to increase data processing speed and to minimize the size of the dictionary. The position coordinates of the point extracted in the point extraction step (S300) may be separately stored.

The reference point position determination step (S400) is a process of determining the position of the reflector 10 using the position coordinates of the point determined to be included in the top voxel. The position of the top voxel generally refers to the coordinates of the center point of the voxel. The position coordinates of the point determined to be included in the top voxel and thus extracted are different from the coordinates of the center point of the top voxel. Therefore, the position coordinates of the extracted point are used to accurately determine the position of the reflector 10. The position of the reflector 10 may serve as a reference point for calibration to match sensing data from the radar 20, the lidar, and the camera.

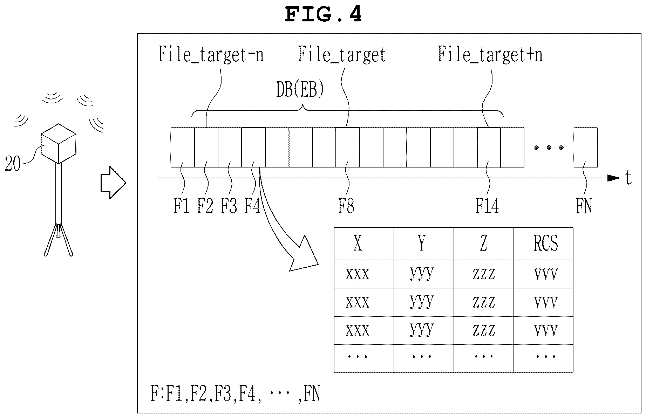

FIG. 4 is a view illustrating data including a reflected signal received by the radar 20 according to one embodiment of the disclosed technology. Reference is made to FIGs. 3 and 4 together.

The method of determining the position of the object sensed by the radar using spatial voxelization according to the embodiment may further include a sensing step (S100) of the radar 20 transmitting a radio wave signal and receiving a reflected signal reflected by the object. The sensing step S100 may further include an operation of the determination module 30 organizing data received from the radar 20 to create a radar sensing file F. The radar sensing file F may be created by the radar 20 receiving the reflected signal and storing the position coordinates and the reflected signal intensity of a point in the form of point cloud data.

Raw data that the radar 20 having receiving the reflected signal provides to the determination module 30 may be in any of various forms. The data that the radar 20 provides to the determination module 30 may be X-axis, Y-axis, or Z-axis coordinates or any of various other forms of data depending on the type of radar 20. The determination module 30 may organize the data received from the radar 20 into the X-axis, Y-axis, Z-axis, and the reflected signal intensity to create a radar sensing file F. The radar sensing file F may be created at a predetermined size or time.

The radar 20 may have a data acquisition frequency of 10 to 20 Hz. The radar 20 may receive a reflected signal at each data acquisition period to create data, and may provide the data to the determination module 30 or may create the radar sensing file F. For example, the radar sensing file F may be created by receiving a reflected signal for a radio wave signal every data acquisition period at 10 to 20 Hz and may have a length of 50 to 60 ms. The data acquisition period of the radar 20 may vary, and the length or size of the radar sensing file F may vary. A plurality of radar sensing files F may be created during the sensing step S100 using the radar 20.

FIG. 4 shows a first radar sensing file F1 to an N-th radar sensing file FN. Here, N is a positive number. In FIG. 4, table A shows data of the fourth radar sensing file F4. The fourth radar sensing file F4 may include values corresponding to the X-axis, Y-axis, and Z-axis, and may include values corresponding to the reflected signal intensity (RCS). The radar sensing file F may include such type of data. The radar sensing file F created by the determination module 30 may be stored in the storage unit 320.

The determination module 30 may load the radar sensing file F stored in the storage unit 320 to perform the voxelization step (S200).

The voxelization step (S200) may include a parameter setting step (S210) of setting parameters including a voxel size, lower and upper thresholds of the reflected signal intensity, and a space range in which a voxel grid is to be created, a filtering step (S220) of excluding points having reflected signal intensities deviating from the range between the lower and upper thresholds, a voxel grid creation step (S230) of creating a voxel grid based on the voxel size and the space range, and a dictionary creation step (S240) of searching, in the voxel grid, for a voxel corresponding to the position of the point stored in the radar sensing file F and cumulatively storing the reflected signal intensity of the point in a voxel ID of the searched voxel to create a dictionary.

In the parameter setting step (S210), a dictionary creation range DB may be further set.

The dictionary creation range DB is the range of a file to be voxelized to create the dictionary. Setting of the dictionary creation range DB may be performed by defining a target file (File_target) and the number (n) of files to be selected back and forth based on the target file. For example, when the eighth radar sensing file F8 is selected as the target file and the number of files (n) to be selected back and forth is selected as 6, the dictionary creation range DB may be set from the second radar sensing file F2 (File_target-n) to the fourteenth radar sensing file F14 (File_target+n).

Alternatively, setting of the dictionary creation range DB may be performed by selecting a start file and an end file. For example, the second radar sensing file F2 may be selected as the start file and the fourteenth radar sensing file F14 may be selected as the end file, whereby the second to fourteenth radar sensing files F2 to F14 may be set as the dictionary creation range DB.

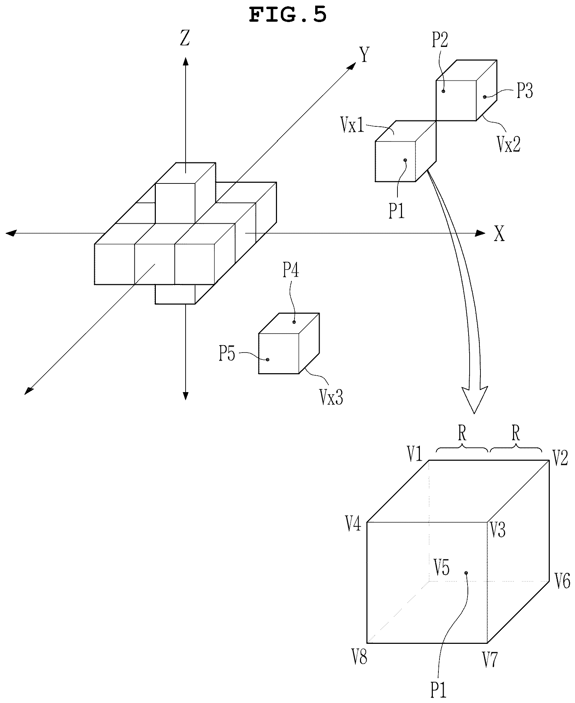

FIG. 5 is a view illustrating spatial voxelization according to one embodiment of the disclosed technology. Reference is made to FIGs. 3 and 4 together.

In the parameter setting step (S210), a voxel size may be set. The voxel size may be denoted by R. The value of R may be input by the user. The voxel may be in the form of a cube. The cubic voxel may include eight vertices V1 to V8. The space coordinates of the first to eighth vertices V1 to V8 may be represented as [-R,-R,-R] to [R,R,R]. In this case, the distance between neighboring vertices may be 2R. The larger the voxel size, the more points may be included therein.

In the parameter setting step (S210), a space range in which the voxel grid is to be created may be set. The space range may be determined by the size of a space sensed by the radar 20. Preferably, the space range is set to be larger than the distance from the radar 20 to the reflector 10. The space range may be set as X-axis, Y-axis, and Z-axis values.

Once the voxel size and the space range are set, a voxel grid may be created. The voxel grid is a division of space into a plurality of voxels. FIG. 5 shows a part of the voxel grid based on the origin. The plurality of voxels included in the voxel grid is each given a voxel ID to distinguish therebetween. The voxel ID may be assigned in a predetermined manner.

In the parameter setting step (S210), lower and upper thresholds of the reflected signal intensity may be set. The radio wave signal of the radar 20 is reflected by the object in various directions and is reflected and attenuated repeatedly. Therefore, it is preferable to ignore reflected signals received by the radar 20 when the reflected signals have reflected signal intensities equal to or less than the predetermined lower threshold. Since the radio wave signal of the radar 20 is attenuated as reflected by the object, a reflected signal having intensity equal to or greater than the upper threshold may not be a reflected signal caused by the radio wave signal transmitted by the radar 20 and is preferably ignored. The lower and upper thresholds of the reflected signal intensity may be input by the user. Alternatively, the lower and upper thresholds may be determined based on the characteristics of the radar 20.

After setting the voxel size, the space range, the lower threshold, the upper threshold, and the dictionary creation range DB in the parameter setting step (S210), the filtering step (S220) may be performed.

The filtering step (S220) is a process of excluding points stored in the radar sensing file F having reflected signal intensities deviating from the range between the lower threshold and the upper threshold. The processor 310 may compare the reflected signal intensities of the points with the lower threshold and the upper threshold, and may exclude points deviating from the range between the lower and upper thresholds. The processor 310 may repeat the filtering step (S220) for each loaded radar sensing file F.

After performing the filtering step (S220), a voxel grid may be created. The voxel grid may be created based on the voxel size and the space range. The processor 310 may repeatedly perform the voxel grid creation step (S230) for each loaded radar sensing file F. When the voxel grid is created, a plurality of voxels is created in the space range, and the processor 310 may determine which voxel the position coordinates of the point correspond to.

After the voxel grid is created, the dictionary creation step (S240) may be performed. The dictionary creation step (S240) is a process of determining which voxel corresponds to the point and recording information of the point in the voxel.

The dictionary creation step (S240) may include a voxel search step (S241) of searching for a voxel corresponding to the position of the point stored in the radar sensing file F in the voxel grid, a determination step (S242) of determining whether the voxel ID of the searched voxel is present in the dictionary, an addition step (S243) of, when the voxel ID of the searched voxel is not present in the dictionary, adding the voxel ID of the searched voxel to the dictionary, storing the reflected signal intensity in the voxel ID, storing count of the point recorded in the voxel ID, dividing the reflected signal intensity by the count, and storing the average reflected signal intensity, and an accumulation step (S244) of, when the voxel ID of the searched voxel is present in the dictionary, cumulatively storing the reflected signal intensity of the voxel ID of the searched voxel in the dictionary, cumulatively storing count of the point recorded in the voxel ID, dividing the reflected signal intensity by the count, and storing the average reflected signal intensity.

The voxel search step (S241) is a process of determining which voxel corresponds to the position of a point stored in the radar sensing file F. In the voxel grid, the positions of a plurality of voxels are set, and the voxel including the point may be searched by comparing the position coordinates of the point with the position of the voxel. For example, in FIG. 5, when comparing the position coordinates of a first point P1 with the position and size of a voxel, it is possible to search for which voxel the point is included in. The first point P1 may be included in a first voxel Vx1, a second point P2 and a third point P3 may be included in a second voxel Vx2, and a fourth point P4 and a fifth point P5 may be included in a third voxel Vx3. Since the radar sensing file includes a plurality of points, the voxel search step (S241) may be repeatedly performed for each point.

Performing the voxel search step (S241) may identify voxels corresponding to the points. Each voxel is given a voxel ID. The determination step (S242) of determining whether the voxel ID is present is to determine whether the voxel ID of the voxel corresponding to the point is recorded in the dictionary. The dictionary may store several voxel IDs and information of points matched with the voxel IDs. The processor 310 determines whether the voxel ID of the searched voxel matches the voxel ID stored in the dictionary.

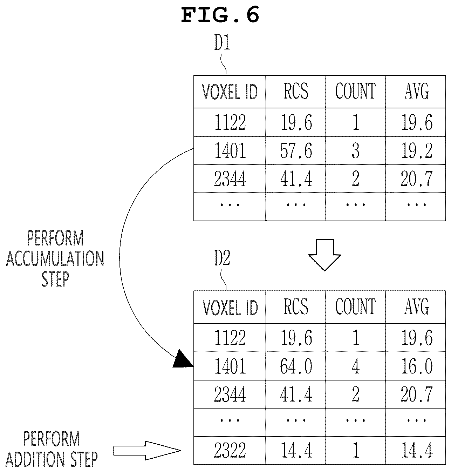

FIG. 6 is a view illustrating a voxel dictionary according to one embodiment of the disclosed technology. Reference is made to FIGs. 3, 4, and 5 together.

When the voxel ID of the searched voxel is not present in the dictionary, the addition step (S243) may be performed, and when the voxel ID of the searched voxel is present in the dictionary, the accumulation step (S244) may be performed.

The addition step (S243) is a process of adding a new voxel ID that is not present in the dictionary. In the addition step (S243), a new searched voxel ID is added to the dictionary, and the voxel ID may be stored in a state of being matched with the reflected signal intensity of the point, count, and the average reflected signal intensity. For example, in FIG. 6, when the voxel ID of the searched voxel is 2322, this does not match the voxel ID stored in the existing dictionary D1, and therefore the addition step (S243) may be performed to add the information of the point to the dictionary. After the addition step (S243), the dictionary D2 may include the voxel ID of the searched voxel, the value (14.4) of the reflected signal intensity (RCS) may be stored, the count may be stored as 1 since the point is newly added, and the average reflected signal intensity (AVG) may be stored with the same value (14.4) as the reflected signal intensity since the count is 1.

The accumulation step (S244) is a process of cumulatively storing the information of the point to the voxel ID present in the dictionary. The presence of the same voxel ID as the searched voxel ID in the existing dictionary D1 means that another point is determined to correspond to the same voxel, and the information of the point is stored in the dictionary. For example, in FIG. 6, when the voxel ID of the searched voxel is 1401, a matching voxel ID is present among the voxel IDs stored in the existing dictionary D1. Therefore, the accumulation step S244 may be performed. After the accumulation step S244, the reflected signal intensity stored in a state of being matched to the voxel ID of the searched voxel is cumulatively stored from 57.6 to 64.0 in the dictionary D2, the count may be cumulatively stored from 3 to 4, and the average reflected signal intensity may be stored from 19.2 to 16.0.

When the parameter setting step (S210) of the voxelization step (S200) is performed once, the filtering step (S220), the voxel grid creation step (S230), and the dictionary creation step (S240) are repeatedly performed for each of a plurality of radar sensing files F set as the dictionary creation range DB. In the dictionary creation step (S240), the voxel search step (S241), the determination step (S242) of determining whether the voxel ID of the searched voxel is present in the dictionary, the addition step (S243), and the accumulation step (S244) are repeatedly performed for each of a plurality of points included in one radar sensing file F. When the voxelization step (S200) is performed for each of the plurality of radar sensing files F set as the dictionary creation range DB, a dictionary cumulatively storing the reflected signal intensity of the point included in the voxel may be obtained.

The dictionary stores a plurality of voxel IDs and reflected signal intensities. Voxels are listed in descending order of the reflected signal intensity, and the voxel having the largest reflected signal intensity may be called the top voxel.

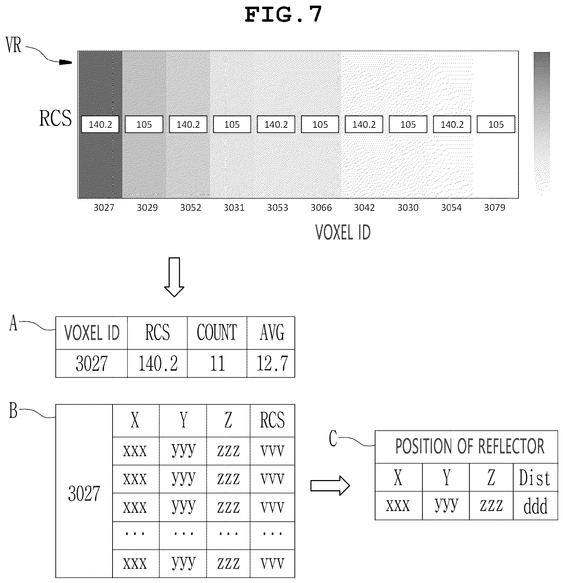

Reference is made to FIG. 3. When the dictionary is created, the point extraction step (S300) may be performed. FIG. 7 is a view illustrating extraction of a point and determination of a reference point according to one embodiment of the disclosed technology. Reference is made to FIGs. 3 and 7 together.

The point extraction step (S300) may include a parameter setting step (S310) of setting parameters including a voxel size, lower and upper thresholds of the reflected signal intensity, and a space range in which a voxel grid is to be created, a filtering step (S320) of excluding points having reflected signal intensities deviating from the range between the lower and upper thresholds, a voxel grid creation step (S330) of creating a voxel grid based on the voxel size and the space range, and a top voxel point extraction step (S340) of loading the radar sensing file F, searching for a voxel corresponding to the position of the point stored in the radar sensing file F, separately storing the position coordinates of the point when the voxel ID of the searched voxel is the same as the voxel ID of the top voxel having the largest accumulated value of the reflected signal intensity in the dictionary, and extracting the point of the top voxel.

The parameter setting step (310) of the point extraction step (S300) may be performed in the same manner as the parameter setting step (210) of the voxelization step (S200). Therefore, the parameter setting step (310) of the point extraction step (S300) may be omitted. In the parameter setting step (310) of the point extraction step (S300), the voxel size, the lower and upper thresholds of the reflected signal intensity, the space range, and the range of the radar sensing file F to extract points (point extraction range EB) may be set. The point extraction range EB may be set to the same as the dictionary creation range DB for creating the dictionary in the voxelization step (S200), or may be set differently therefrom.

The filtering step (320) of the point extraction step (S300) may be performed in the same manner as the filtering step (220) of the voxelization step (S200). Of the points stored in the radar sensing file F set as the point extraction range EB, points whose reflected signal intensities deviate from the range between the lower threshold and the upper threshold may be excluded.

The voxel grid creation step (S330) of the point extraction step (S300) may be performed in the same manner as the voxel grid creation step (S230) of the voxelization step (S200). A grid may be created with voxels of a set voxel size in a set space range.

The top voxel point extraction step (S340) is a process of searching for a voxel corresponding to a point stored in the radar sensing file F set as the point extraction range EB and extracting the point when the searched voxel is the same as the top voxel. The top voxel point extraction step (S340) may include a voxel search step (S341) of searching for a voxel corresponding to the position of the point stored in the radar sensing file F in the voxel grid, a determination step (S342) of determining whether the voxel ID of the searched voxel matches the voxel ID of the top voxel in the dictionary, and a point position storage step (S343) of, when the voxel ID of the searched voxel matches the voxel ID of the top voxel, storing the position of the point in the voxel ID of the top voxel.

The voxel search step (S341) of the top voxel point extraction step (S340) is similar to the voxel search step (S241) of the dictionary creation step (S240). The voxel search step (S341) of the top voxel point extraction step (S340) is a process of checking a voxel corresponding to the position of the point in the radar sensing file F set as the point extraction range EB. When a voxel corresponding to the point is searched, the voxel ID of the voxel may be checked.

Subsequently, the determination step (S342) is performed to determine whether the voxel ID of the searched voxel matches the voxel ID of the top voxel in the dictionary. When the voxel ID of the searched voxel is different from the voxel ID of the top voxel, the voxel search step (S241) of searching for the voxel with respect to the next point in the radar sensing file F is performed again.

When the voxel ID of the searched voxel is the same as the voxel ID of the top voxel, the point position storage step (S343) is performed. The point position storage step (S343) is a process of separately storing the position coordinates of the point determined to be included in the top voxel. At this time, the position coordinates of the point may be stored in a state of being matched with the voxel ID of the top voxel. When a plurality of points is included in the top voxel, the position coordinates of the plurality of points may be stored in one top voxel in separately stored data. For example, it can be seen from the visualization results of FIG. 7 that the voxel ID of the top voxel is 3027. Referring to the details A of the top voxel recorded in the dictionary, it can be seen that the voxel ID of the top voxel is 3027, the accumulated reflected signal intensity is 140.2, the count is 11, and the average reflected signal intensity is 12.7. When the voxel ID of the voxel corresponding to the point included in the radar sensing file F is 3027, this is the same as the voxel ID of the top voxel, and therefore the position coordinates of the point may be stored separately, and the reflected signal intensity of the point may be stored separately. Referring to the details B in which the position coordinates and the reflected signal intensity of the point are stored separately in FIG. 7, it can be seen that the position coordinates and reflected signal intensities of a plurality of points are stored in the voxel ID 3027.

When the parameter setting step (S210) is performed once in the point extraction step (S300), the filtering step (S220), the voxel grid creation step (S230), and the top voxel point extraction step (S340) are repeatedly performed for one radar sensing file F or each of a plurality of radar sensing files F set as the point extraction range EB. In the top voxel point extraction step (S340), the voxel search step (S241), the determination step (S342) of determining whether the voxel ID of the searched voxel matches the voxel ID of the top voxel, and a step of storing the position of the point are repeatedly performed for each of the plurality of points included in one radar sensing file F. When the point extraction step S300 is performed for one radar sensing file F or each of a plurality of radar sensing files F set as the radar sensing file F from which points are to be extracted, the position coordinates of the points determined to be included in the top voxel may be stored separately.

When the position coordinates of the points corresponding to the top voxel are extracted, a step (S400) of determining the position of a reference point may be performed. The reference point refers to the position of the reflector 10 that is used as a reference for calibration. In the calibration process, it is necessary to determine the position of the reflector 10 as a reference point based on which the radar 20, the lidar, and the camera are adjusted to measure one reflector 10 at the same position. The method of determining the position of the object sensed by the radar using spatial voxelization according to the embodiment may be used to determine the position of the reference point measured by the radar 20 during the calibration process.

Referring to the details C in which the position of the reflector 10 is determined in FIG. 7, the position of the reflector 10 (i.e., the position of the reference point) is calculated using the position coordinates of the points included in the top voxel. The X-coordinate of the reflector 10 may be calculated as the average of the X-coordinates of the position coordinates of the points included in the top voxel, the Y-coordinate of the reflector 10 may be calculated as the average of the Y-coordinates of the position coordinates of the points included in the top voxel, and the Z-coordinate of the reflector 10 may be calculated as the average of the Z-coordinates of the position coordinates of the points included in the top voxel. In the position of the reflector 10, the distance (Dist) refers to the distance from the radar 20 to the reflector 10. The distance may be calculated from Equation 1 below using the position coordinates (X,Y,Z) of the reflector 10. The position coordinates of the reflector 10 are the coordinates of the reference point.

[Equation 1]

$$Dist = \sqrt{X^2 + Y^2 + Z^2}$$

Dist: the straight line distance from the radar 20 to the reflector 10, X: X-coordinate value of the reflector 10, Y: Y-coordinate value of the reflector 10, and Z: Z-coordinate value of the reflector 10

The method of determining the position of the object sensed by the radar using spatial voxelization according to the embodiment may further include a step of visualizing the reflected signal intensities of the voxels stored in the dictionary in order of magnitude. The visualization step may be optionally performed after the dictionary creation step (S240). The visualization results VR may be provided by displaying the voxels stored in the dictionary in dark colors when the reflected signal intensity is large, and in light colors when the reflected signal intensity is small. In the visualization results VR, accumulated reflected signal intensity values and voxel IDs may be displayed. Referring to the visualization results VR, the user may check the accumulated values of the reflected signal intensities of the points included in the voxel in order.

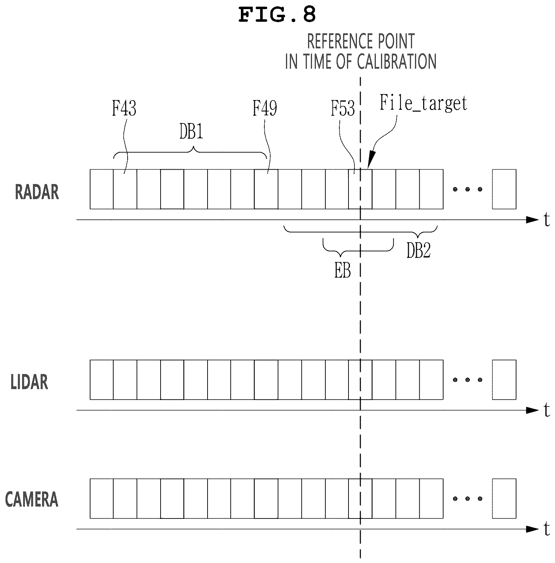

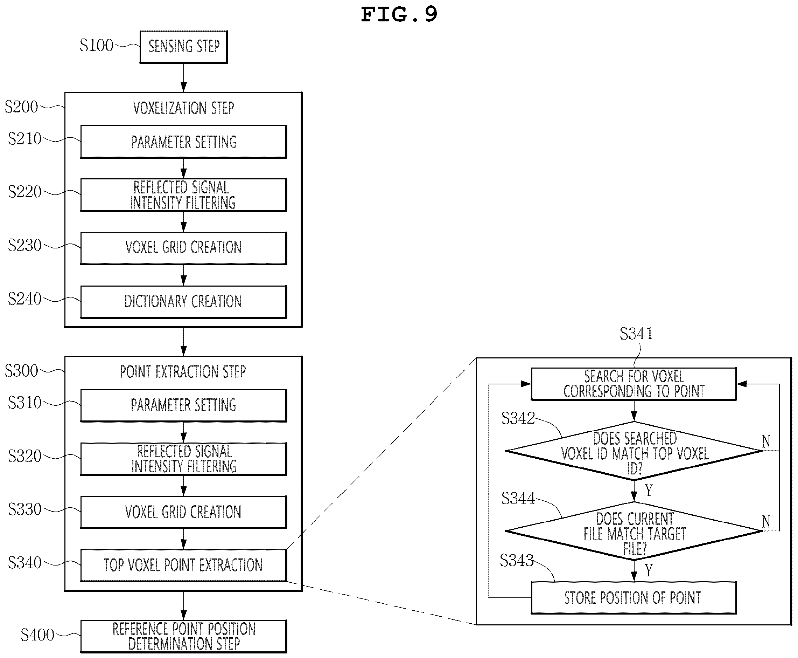

FIG. 8 is a view illustrating calibration according to one embodiment of the disclosed technology. FIG. 9 is a view illustrating a method of extracting a reference point at the point in time of calibration.

The method of determining the position of the object sensed by the radar using spatial voxelization according to the embodiment may be used for calibration. For example, calibration may be performed in a manner in which the radar 20, the lidar, and the camera sense a single reference point (reflector 10). The reference point in time, at which the position is adjusted during the calibration process, may be the same for all sensors (radar 20, lidar, and camera). The lidar or the camera has the advantage of acquiring clear data at a specific point in time due to the characteristics of an optical instrument. However, the radar 20 is a radio wave device, and therefore it is necessary to determine a reference point by synthesizing data collected over a predetermined period of time rather than acquiring data at a specific point in time. Therefore, only the target file (File_target) corresponding to the reference point in time of calibration may not be sufficient to determine an accurate reference point. For example, the target file may not be long enough. The method of determining the position of the object sensed by the radar using spatial voxelization according to the embodiment may use a method of generating a dictionary using a plurality of radar sensing files F and extracting points contained in the target file corresponding to the reference point in time of calibration to determine a reference point. Thus, the position of a reference point measured by the radar 20 at the reference point in time of calibration may be determined.

In the method of determining the position of the object sensed by the radar using spatial voxelization according to the embodiment, the top voxel point extraction step (S340) may further include a step (S344) of determining whether the current file including the point matches the target file when the voxel ID of the searched voxel matches the voxel ID of the top voxel in the dictionary. When the current file matches the target file Y, the point position storage step (S343) is performed, and when the current file does not match the target file Y, the point position storage step (S343) is not performed.

Here, the dictionary creation range DB in the dictionary creation step (S240) and the point extraction range EB in the point extraction step (S300) may be different from each other. For example, as shown in FIG. 8, a first dictionary creation range DB1 may be 43rd to 49th radar sensing files F43 to F49, and the point extraction range EB corresponding to the reference point in time of calibration may be a 53rd radar sensing file F53, which is one target file (File_target). A dictionary may be created using the radar sensing files F of the first dictionary creation range DB1, and the points corresponding to the top voxel among the points included in the target file may be extracted to determine the position of the reference point.

Alternatively, in the dictionary creation step (S240), the dictionary creation range DB may include a target file corresponding to the reference point in time of calibration, and in the point extraction step (S300), the point extraction range EB may further include a file different from the target file. For example, as shown in FIG. 8, a second dictionary creation range DB2 includes a target file (File_target), and the point extraction range EB also includes a target file (File_target). A dictionary may be created using the radar sensing files F of the second dictionary creation range DB2, and the points corresponding to the top voxel and the target file (File_target) among the points included in the point extraction range EB may be extracted to determine the position of the reference point. Here, points included in the radar sensing file F that correspond to the top voxel but are not in the target file (File_target) are not extracted.

The reference point for the radar 20 for use in calibration may be determined using the described method. The method and apparatus according to the embodiment have the advantage that the reference point may be determined in everyday environments in which various objects are present, thereby eliminating the need to separately provide a space for calibration.

Although the disclosed technology has been described in detail with reference to the embodiments, the embodiments are provided to describe the disclosed technology in detail, the disclosed technology is not limited thereto, and the disclosed technology can be modified or improved by a person having ordinary skill in the art to which the preset invention pertains within the technical idea of the invention.

Simple modifications and changes of the disclosed technology are to be appreciated as being included within the scope and spirit of the invention, and the protection scope of the disclosed technology will be defined by the accompanying claims.

[Numbers in the drawings]

1: apparatus and method for determining the position of an object sensed by a radar using spatial voxelization
En: environment
Ob: object
10: reflector

20: rader
30: determination module
310: processor
320: storage unit
330: communication unit
340: input/output unit

**Claims**

1. A method of determining a position of an object sensed by a radar using spatial voxelization, the method comprising:

   a voxelization step of loading a radar sensing file storing a reflected signal returned as a result of a radio wave signal transmitted by the radar being reflected by the object, searching for a voxel corresponding to a position of a point stored in the radar sensing file, and cumulatively storing a reflected signal intensity of the point in a voxel ID of the searched voxel to create a dictionary;
   a point extraction step of loading the radar sensing file, searching for a voxel corresponding to the position of the point stored in the radar sensing file, and separately storing position coordinates of the point when a voxel ID of the searched voxel is the same as a voxel having a largest accumulated value of the reflected signal intensity in the dictionary; and
   a reference point position determination step of determining a position of a reference point for calibration based on the separately stored position coordinates of the point.

2. The method according to claim 1, wherein the radar sensing file is created by the radar receiving the reflected signal and storing position coordinates and reflected signal intensity of a point in a form of point cloud data.

3. The method according to claim 2, wherein the voxelization step comprises:

   a parameter setting step of setting parameters comprising a voxel size, lower and upper thresholds of the reflected signal intensity, and a space range in which a voxel grid is to be created;
   a filtering step of excluding points having reflected signal intensities deviating from a range between the lower and upper thresholds;
   a voxel grid creation step of creating a voxel grid based on the voxel size and the space range; and
   a dictionary creation step of searching, in the voxel grid, for a voxel corresponding to the position of the point stored in the radar sensing file and cumulatively storing the reflected signal intensity of the point in a voxel ID of the searched voxel to create a dictionary.

4. The method according to claim 3, wherein the dictionary creation step comprises:

   a voxel search step of searching for a voxel corresponding to the position of the point stored in the radar sensing file in the voxel grid;
   a determination step of determining whether a voxel ID of the searched voxel is present in the dictionary;
   an addition step of, when the voxel ID of the searched voxel is not present in the dictionary, adding the voxel ID of the searched voxel to the dictionary, storing the reflected signal intensity in the voxel ID, storing a count of the point recorded in the voxel ID, dividing the reflected signal intensity by the count, and storing an average reflected signal intensity; and
   an accumulation step of, when the voxel ID of the searched voxel is present in the dictionary, cumulatively storing the reflected signal intensity of the voxel ID of the searched voxel in the dictionary, cumulatively storing a count of the point recorded in the voxel ID, dividing the reflected signal intensity by the count, and storing an average reflected signal intensity.

5. The method according to claim 2, wherein the point extraction step comprises:

   a parameter setting step of setting parameters comprising a voxel size, lower and upper thresholds of the reflected signal intensity, and a space range in which a voxel grid is to be created;
   a filtering step of excluding points having reflected signal intensities deviating from a range between the lower and upper thresholds;
   a voxel grid creation step of creating a voxel grid based on the voxel size and the space range; and
   a top voxel point extraction step of loading the radar sensing file, searching for a voxel corresponding to the position of the point stored in the radar sensing file, separately storing position coordinates of the point when a voxel ID of the searched voxel is the same as a voxel ID of a top voxel having a largest accumulated value of the reflected signal intensity in the dictionary, and extracting a point of the top voxel.

6. The method according to claim 5, wherein the top voxel point extraction step comprises:

   a voxel search step of searching for a voxel corresponding to the position of the point stored in the radar sensing file in the voxel grid;

a determination step of determining whether a voxel ID of the searched voxel matches the voxel ID of the top voxel in the dictionary; and a point position storage step of, when the voxel ID of the searched voxel matches the voxel ID of the top voxel, storing the position of the point in the voxel ID of the top voxel.

7. The method according to claim 6, wherein

the top voxel point extraction step further comprises determining whether a current file comprising the point matches a target file when the voxel ID of the searched voxel matches the voxel ID of the top voxel in the dictionary, when the current file matches the target file, the point position storage step is performed, and when the current file does not match the target file, the point position storage step is not performed.

8. An apparatus for determining a position of an object sensed by a radar using spatial voxelization, the apparatus comprising:

a radar configured to transmit a radio wave signal and to receive a reflected signal reflected by the object; and a determination module configured to analyze a radar sensing file storing the reflected signal received by the radar using spatial voxelization and to determine a position of a reflector based on which calibration is performed.

9. The apparatus according to claim 8, wherein the determination module comprises:

a processor configured to execute program code; a storage unit connected to the processor so as to transmit and receive data to and from the processor, the storage unit being configured to store the program code, the radar sensing file storing the reflected signal received by the radar, and a dictionary; and an input/output unit connected to the processor so as to transmit and receive data to and from the processor, the input/output unit being configured to receive a parameter required for voxelization, and the program code is written to perform any one of methods described in claims 1 to 7.

# FIG.1

En

Ob

Ob

10

Ob

Ob

30

20

# FIG.2

1

10 — REFLECTOR

REFLECTED
SIGNAL

30

DETERMINATION MODULE

RADIO WAVE
SIGNAL

310 — PROCESSOR

STORAGE UNIT — 320

20 — RADAR

COMMUNICATION
UNIT

INPUT/OUTPUT
UNIT

330

340

**FIG.3**

S100 — SENSING STEP

S200 — VOXELIZATION STEP
- S210 — PARAMETER SETTING
- S220 — REFLECTED SIGNAL INTENSITY FILTERING
- S230 — VOXEL GRID CREATION
- S240 — DICTIONARY CREATION

S300 — POINT EXTRACTION STEP
- S310 — PARAMETER SETTING
- S320 — REFLECTED SIGNAL INTENSITY FILTERING
- S330 — VOXEL GRID CREATION
- S340 — TOP VOXEL POINT EXTRACTION

S400 — REFERENCE POINT POSITION DETERMINATION STEP

S241 — SEARCH FOR VOXEL CORRESPONDING TO POINT

S242 — IS SEARCHED VOXEL ID PRESENT IN DICTIONARY?

S243 (N):
- ADD VOXEL ID
- STORE RCS
- STORE COUNT
- AVERAGE RCS

S244 (Y):
- SEARCHED VOXEL ID
- ACCUMULATE RCS
- ACCUMULATE COUNT
- AVERAGE RCS

S341 — SEARCH FOR VOXEL CORRESPONDING TO POINT

S342 — DOES SEARCHED VOXEL ID MATCH TOP VOXEL ID?

S343 (Y) — STORE POSITION OF POINT

EP 4 509 867 A1

## FIG.4

| X | Y | Z | RCS |
|------|------|------|------|
| xxx | yyy | zzz | vvv |
| xxx | yyy | zzz | vvv |
| xxx | yyy | zzz | vvv |
| ··· | ··· | ··· | ··· |

F:F1,F2,F3,F4, ··· ,FN

# FIG.5

# FIG.6

D1

| VOXEL ID | RCS | COUNT | AVG |
|----------|------|-------|------|
| 1122 | 19.6 | 1 | 19.6 |
| 1401 | 57.6 | 3 | 19.2 |
| 2344 | 41.4 | 2 | 20.7 |
| ... | ... | ... | ... |

PERFORM
ACCUMULATION
STEP

D2

| VOXEL ID | RCS | COUNT | AVG |
|----------|------|-------|------|
| 1122 | 19.6 | 1 | 19.6 |
| 1401 | 64.0 | 4 | 16.0 |
| 2344 | 41.4 | 2 | 20.7 |
| ... | ... | ... | ... |
| 2322 | 14.4 | 1 | 14.4 |

PERFORM
ADDITION STEP

# FIG.7

VR

RCS

| 140.2 | 105 | 140.2 | 105 | 140.2 | 105 | 140.2 | 105 | 140.2 | 105 |

3027  3029  3052  3031  3053  3066  3042  3030  3054  3079

VOXEL ID

A

| VOXEL ID | RCS | COUNT | AVG |
|----------|-------|-------|------|
| 3027 | 140.2 | 11 | 12.7 |

B

| | X | Y | Z | RCS |
|------|-----|-----|-----|-----|
| | xxx | yyy | zzz | vvv |
| | xxx | yyy | zzz | vvv |
| 3027 | xxx | yyy | zzz | vvv |
| | ... | ... | ... | ... |
| | xxx | yyy | zzz | vvv |

C

| POSITION OF REFLECTOR | | | |
|------|------|------|------|
| X | Y | Z | Dist |
| xxx | yyy | zzz | ddd |

# FIG.8

REFERENCE POINT
IN TIME OF CALIBRATION

**FIG.9**

S100 — SENSING STEP

S200 — VOXELIZATION STEP
- S210 — PARAMETER SETTING
- S220 — REFLECTED SIGNAL INTENSITY FILTERING
- S230 — VOXEL GRID CREATION
- S240 — DICTIONARY CREATION

S300 — POINT EXTRACTION STEP
- S310 — PARAMETER SETTING
- S320 — REFLECTED SIGNAL INTENSITY FILTERING
- S330 — VOXEL GRID CREATION
- S340 — TOP VOXEL POINT EXTRACTION

S400 — REFERENCE POINT POSITION DETERMINATION STEP

S341 — SEARCH FOR VOXEL CORRESPONDING TO POINT

S342 — DOES SEARCHED VOXEL ID MATCH TOP VOXEL ID? — N

Y

S344 — DOES CURRENT FILE MATCH TARGET FILE? — N

Y

S343 — STORE POSITION OF POINT

## INTERNATIONAL SEARCH REPORT

| International application No. |
| --- |
| **PCT/KR2024/005063** |

**A. CLASSIFICATION OF SUBJECT MATTER**

**G01S 7/40**(2006.01)i; **G01S 13/06**(2006.01)i

According to International Patent Classification (IPC) or to both national classification and IPC

**B. FIELDS SEARCHED**

Minimum documentation searched (classification system followed by classification symbols)

G01S 7/40(2006.01); G01S 13/06(2006.01); G01S 17/89(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반사신호(reflected signal), 포인트(point), 위치좌표(position coordinates), 복셀 (voxel), 캘리브레이션(calibration)

**C. DOCUMENTS CONSIDERED TO BE RELEVANT**

| Category* | Citation of document, with indication, where appropriate, of the relevant passages | Relevant to claim No. |
| --- | --- | --- |
| Y<br><br>A | NOBIS, Felix et al. Kernel Point Convolution LSTM Networks for Radar Point Cloud Segmentation. Applied Sciences. Vol. 11, Issue 6, Article No. 2599, pp. 1-19, 15 March 2021.<br>See abstract and sections 2.2.-5.1. | 8<br>1-7,9 |
| Y | CHOU, Chieh et al. Mirror-Assisted Calibration of a Multi-modal Sensing Array with a Ground Penetrating Radar and a Camera. 2017 IEEE/RSJ International Conference on Intelligent Robots and Systems (IROS). pp. 1457-1463, 24 September 2017.<br>See title and abstract. | 8 |
| A | CN 114814750 A (VISIONNAV ROBOTICS (SHENZHEN) LTD.) 29 July 2022 (2022-07-29)<br>See paragraphs [0028]-[0141] and claim 7. | 1-9 |
| A | JP 2022-541976 A (SHANGHAI SENSETIME INTELLIGENT TECHNOLOGY CO., LTD.) 29 September 2022 (2022-09-29)<br>See paragraphs [0014]-[0084]. | 1-9 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 July 2024** | **23 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/005063** |

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2621789 B1 (KOREA ELECTRONICS TECHNOLOGY INSTITUTE) 09 January 2024 (2024-01-09)<br>        See claims 1-8. | 1-9 |

Form PCT/ISA/210 (second sheet) (July 2022)

**INTERNATIONAL SEARCH REPORT**
Information on patent family members

International application No.

**PCT/KR2024/005063**

| Patent document cited in search report | | | Publication date (day/month/year) | Patent family member(s) | | | Publication date (day/month/year) |
|---|---|---|---|---|---|---|---|
| CN | 114814750 | A | 29 July 2022 | None | | | |
| JP | 2022-541976 | A | 29 September 2022 | AU | 2020-102001 | A4 | 01 October 2020 |
| | | | | AU | 2021-301699 | A1 | 06 January 2022 |
| | | | | AU | 2021-301921 | A1 | 06 January 2022 |
| | | | | AU | 2021-302126 | A1 | 06 January 2022 |
| | | | | CN | 113855111 | B | 05 September 2023 |
| | | | | CN | 113855243 | B | 23 January 2024 |
| | | | | CN | 115551434 | A | 30 December 2022 |
| | | | | CN | 115551435 | A | 30 December 2022 |
| | | | | CN | 115551436 | A | 30 December 2022 |
| | | | | CN | 115605139 | A | 13 January 2023 |
| | | | | EP | 4174644 | A1 | 03 May 2023 |
| | | | | EP | 4175328 | A1 | 03 May 2023 |
| | | | | EP | 4175350 | A1 | 03 May 2023 |
| | | | | EP | 4241789 | A2 | 13 September 2023 |
| | | | | JP | 2023-532573 | A | 28 July 2023 |
| | | | | JP | 2023-532741 | A | 31 July 2023 |
| | | | | JP | 2023-533921 | A | 07 August 2023 |
| | | | | JP | 7266121 | B2 | 27 April 2023 |
| | | | | JP | 7416956 | B2 | 17 January 2024 |
| | | | | JP | 7483764 | B2 | 15 May 2024 |
| | | | | KR | 10-2022-0004099 | A | 11 January 2022 |
| | | | | KR | 10-2022-0127277 | A | 19 September 2022 |
| | | | | KR | 10-2023-0002994 | A | 05 January 2023 |
| | | | | KR | 10-2023-0013113 | A | 26 January 2023 |
| | | | | KR | 10-2023-0015957 | A | 31 January 2023 |
| | | | | KR | 10-2023-0015996 | A | 31 January 2023 |
| | | | | KR | 10-2023-0030627 | A | 06 March 2023 |
| | | | | KR | 10-2023-0038429 | A | 20 March 2023 |
| | | | | KR | 10-2359063 | B1 | 08 February 2022 |
| | | | | KR | 10-2503201 | B1 | 23 February 2023 |
| | | | | US | 11298777 | B2 | 12 April 2022 |
| | | | | US | 11342139 | B1 | 24 May 2022 |
| | | | | US | 11514225 | B2 | 29 November 2022 |
| | | | | US | 11514865 | B2 | 29 November 2022 |
| | | | | US | 11544927 | B2 | 03 January 2023 |
| | | | | US | 11680994 | B2 | 20 June 2023 |
| | | | | US | 2023-0315477 | A1 | 05 October 2023 |
| | | | | US | 2023-0322953 | A1 | 12 October 2023 |
| | | | | US | 2023-0327082 | A1 | 12 October 2023 |
| | | | | US | 2023-0328172 | A1 | 12 October 2023 |
| | | | | US | 2023-0329808 | A1 | 19 October 2023 |
| | | | | US | 2024-0050583 | A1 | 15 February 2024 |
| | | | | WO | 2022-002279 | A1 | 06 January 2022 |
| | | | | WO | 2022-005615 | A1 | 06 January 2022 |
| | | | | WO | 2022-016774 | A1 | 27 January 2022 |
| | | | | WO | 2022-016790 | A1 | 27 January 2022 |
| | | | | WO | 2022-109902 | A1 | 02 June 2022 |
| | | | | WO | 2022-109906 | A1 | 02 June 2022 |
| KR | 10-2621789 | B1 | 09 January 2024 | None | | | |

Form PCT/ISA/210 (patent family annex) (July 2022)

**EP 4 509 867 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230013763 A